# EUROPEAN PATENT SPECIFICATION

(11) **EP 3 882 379 B1**
(45) Date of publication and mention of the grant of the patent: **13.03.2024**
(21) Application number: 19884027.4
(22) Date of filing: 06.11.2019
(51) Int. Cl.: C25F 3/16, B22F 10/62, C22C 1/04, C09G 1/02, C25F 3/26

(54) **USE OF HCL IN DRY ELECTROLYTES TO POLISH TI AND OTHER METAL AND ALLOY SURFACES BY ION TRANSPORT**
VERWENDUNG VON HCL IN TROCKENELEKTROLYTEN ZUM POLIEREN VON TI UND ANDEREN METALL- UND LEGIERUNGSOBERFLÄCHEN DURCH IONENTRANSPORT
UTILISATION D'UN HCL DANS DES ÉLECTROLYTES SECS POUR POLIR TI ET D'AUTRES SURFACES DE MÉTAUX ET D'ALLIAGES PAR LE BIAIS DU TRANSPORT IONIQUE

(30) Priority: 12.11.2018 ES 201831093
(43) Date of publication of application: 22.09.2021
(73) Proprietor: Drylyte, S.L., 08035 Barcelona (ES)
(72) Inventor: SARSANEDAS MILLET, Pau, 08035 Barcelona (ES)
(74) Representative: Espiell Gomez, Ignacio
(86) International application number: PCT/ES2019/070751
(87) International publication number: WO 2020/099699

(56) References cited:
- EP-A2- 0 325 562
- WO-A1-01/61080
- ES-A1- 2 604 830
- GB-A- 1 513 532
- US-A- 3 087 874
- US-A1- 2003 066 760
- US-B2- 7 691 250

## Description

### Field of the invention

The field of this invention is the sector of the industry focused in smoothing, burnishing and polishing metallic surfaces, with applications in fields such as, for example, odontology, medicine, laser sintering, automotive and aeronautics inter alias.

### Object of the invention

The object of this invention refers to a method for smoothing and polishing titanium and other metals surfaces characterized by the use of ionic transport using a dry electrolyte containing hydrochloric acid as electrolyte and also, to the said dry electrolyte that contains hydrochloric acid in order to carry out this method. The use of the said system has distinguished advantages and characteristics that means a significant novelty compared with the known state-of-art.

### Background of the invention

The titanium and the derived alloys are materials having a low weight and a good corrosion resistance. Therefore, it meets a key function in a number of applications such as components in the chemical, medical implants, automobiles and aeronautics industry, among many others. Nowadays, there exists a growing demand of polished titanium surfaces.

In addition, there exists an increasing market in the selective laser sintering and the selective fusion by laser, usually named 3D printing on metal. These are additive manufacturing techniques capable to produce complex forms using different kinds of materials. The use of these processes with titanium and other metals gives as result very rough surfaces. This is an important drawback in many fields of applications because the rough surfaces increase the friction and corrosion, facilitate the colonisation of bacteria and fungus and conceal stress flaws and fractures. Therefore, an efficient and profitable method is needed to polish complex forms.

Polishing techniques by mechanical abrasion are not suitable for complex forms. In addition, these methods tend to withdraw a great amount of metal, produce inclusions and contamination on the metallic surface and round edges and excessively sharp vertices.

The current electropolishing techniques provokes a reduction of up to 50% of the initial roughness. This implies that the parts with a high initial roughness have to be previously treated with another polishing method to achieve acceptable results, which increases the global time and costs.

The beam irradiation of a large area is capable to polish titanium to generate surfaces having a low roughness. However, it is a very complex technique to be handled and has high associated costs.

The same applicant is the owner of the patent ES2604830A1 referring to a "method for smoothing and polishing metals through the ionic transport by means of free solid bodies (...)". The said free solid bodies capable of performing the ionic transport consist in a set of porous particles that retain a certain amount of liquid and a conductive liquid electrolyte that has to be retained in the particles, preferably aqueous hydrogen fluoride ranging from 1 to 10%. However, this electrolyte does not provide satisfactory results in many metals such as, for example, the titanium. Electropolishing processes of metallic materials are described in US 7691250 B2, GB 1513532 A and US 2003/066760 A1.

The object of this invention is the use of dry electrolytes for smoothing and polishing titanium and other metals and alloy surfaces through ionic transport, wherein the dry electrolyte comprises a set of porous particles retaining a conductive liquid comprising HCl.

### Summary of the invention

The use of hydrochloric acid in dry electrolytes to polish metallic surfaces through ion transport is a novelty in the field of metals polishing that has advantages and characteristics that are explained in the text below.

A dry electrolyte comprises a set of porous particles having the capacity to retain a given amount of liquid and a given amount of electrically conductive liquid retained in the particles.

This invention specifically refers to dry electrolytes that comprise porous particles having the capacity to retain a given amount of liquid and a given amount of electrically conductive liquid that contains hydrochloric acid.

The particles can be of any material, such as polymer or ceramic, provided that they have the capacity to retain a given amount of liquid and are chemically resistant to the hydrochloric acid. Preferably, the particles are based in polymeric materials. It has been proved that the porous particles based in a sulfonated polymer (that means that the polymer has groups of linked active sulfonic acid) provide good results. Preferably, the sulfonated polymer of the porous particles is based in a styrene and divinylbenzene copolymer.

The size and shape of the particles can be selected depending on the roughness involved. Specifically, the porous particles can be spheres of ion exchange resin, such as, for example, but without limiting purposes, AMBERLITE 252RFH having a capacity of ion exchange of 1.7 eq L⁻¹, a density of 1,24 g ml⁻¹, a size of diameter ranging from 0.6 to 0.8 mm and a water retention capacity ranging from 52 to 58 %.

The main characteristic of this invention is that the electrically conductive liquid contains HCl. The concentration of HCl in the dry electrolyte depends, among other parameters, on the metal or alloy that is to be polished, on the full surface and on the shape. Among all the possible solvents, the water is the preferred solvent. The electropolishing process can be carried out using a dry electrolyte containing an electrically conductive liquid equivalent (when the full amount of solvent in the resin is borne in mind) to a solution of HCl in water in an interval ranging from 1 and 38 %. A concentration higher than 38 % should provoke corrosive hydrogen chloride gas effluxion, that would make necessary working in a sealed pressurized system. Best results are achieved in an interval from 3 to 20 %, preferably from 5 to 15 %. Concentrations close to 15 % obtain a quick process speed that is adapted to large surface areas. Lower concentrations close to a performance of 5 % are best for smaller surface areas and more complex shapes.

A usual problem in the electropolishing systems is the passivated layers formation on the metal surface that blocks the process. This problem is extreme in the case of titanium, that forms a homogeneous layer of TiO₂, that is not conductive and is not easy to transport.

Experimentally, it was proved that, in a non-obvious form, the hydrochloric acid favors the transport of metallic ions from the surface to the particles. The hydrochloric acid has several effects. It is a strong acid, which means that it provides protons or hydronium ions (H⁺ H₃O⁺) to the solution. These ions have a higher ion mobility in water, which increases the electric conductivity, speeding up the process. On the other hand, it provides chloride anions Cl⁻ to the medium. In the presence of this anion, the titanium oxidation generates not only titanium oxide, but also a fraction of titanium chloride.

Ti⁰ + 2 H₂O → TiO₂ + 4 H⁺ + 4 e-

Ti⁰ + 4 Cl⁻ → TiCl₄ + 4 e⁻

It is not obvious that the formation of titanium chloride makes unstable the passivation layer formed on the surface, making it, therefore, prone to be withdrawn. In addition, the chloride anions have a relatively high complexation capacity with metal, which favors the transport of metallic ions from the surface to the particle.

The use of the solution of hydrochloric acid to electropolishing can be cumbersome because of the hydrogen chloride gas effluxes, that are dangerous for the health and provoke corrosion in the electric equipment. In addition, the prolonged immersion of the metal part in hydrochloric acid can produce attacks on the surface and can have a damaging effect on the levelling process.

Therefore, the effect of the hydrochloric acid is interesting when it is a part of a dry electrolyte. Due to the fact that it is confined in particles, the effect of the HCl would be focused on the peaks of the surface roughness, having thus a stronger effect where it is required. In addition, the relative movement of the particles with respect to the metal part makes that the particle-metal time of contact is relatively short, which favors a localized action on the surface. Even more, the fact that the hydrochloric acid is confined within the particles reduces the hydrogen chloride gas efflux.

Summarizing, a dry electrolyte can be used containing HCl to polish metallic surfaces, even when the metal forms stable passivation layers. For this reason, a dry electrolyte can be used containing HCl in a large range of metals, however, it is specially indicated for those metals that form these passivation layers such as the titanium.

Therefore, the use of dry electrolytes containing hydrochloric acid allows electropolishing surfaces of titanium and other metals in a quick and profitable manner.

Also, an object of this invention is the dry electrolyte that contains hydrochloric acid.

### Examples of embodiment

These are some of the cases of example without limiting purpose.

### Example 1

A dry electrolyte was used made of AMBERLITE 252RFH that contained HCl at 7 % in water as conductive liquid to polish a surface of titanium. A part of titanium was moved having an 8 cm² surface inside the dry electrolyte in an orbital cycle and the container of the dry electrolyte was vibrated. An electric current of 18 V, 20 µs positive, 20 µs negative and 10 µs to 0 V was applied to the part of titanium using an iridium mesh on titanium as counter electrode. After 10 min, the surface had acquired spectacular properties.

### Example 2

A dry electrolyte was used, AMBERLITE 252RFH that contained HCl at 14 % in water as conductive liquid, to polish. A part of titanium of 55 cm² was moved inside the dry electrolyte in an orbital cycle and the container of the dry electrolyte was vibrated. An electric current was applied of 40 V, 20 µs positive, 20 µs negative and 10 µs to 0 V to the part of titanium using an iridium mesh on titanium as counter electrode. After 30 min, the surface had acquired spectacular properties.

## Claims

1. Use of dry electrolytes to polish Ti and other metals and alloys surfaces through ion transport **characterized in that** the dry electrolyte comprises a set of porous particles retaining a conductive liquid comprising HCl.

2. Use of dry electrolytes to polish Ti and other metals and alloys surfaces through ion transport according to claim 1 **characterized in that** the concentration of HCl in relation to the solvent is ranging from 1 to 38 %.

3. Use of dry electrolytes to polish Ti and other metals and alloys surfaces through ion transport according to claim 2 **characterized in that** the concentration of HCl in relation to the solvent is ranging from 5 and 15 %.

4. Dry electrolyte **characterized in that** it comprises a set of porous particles retaining a conductive liquid comprising HCl as conductive liquid according to any of the preceding claims.

## Patentansprüche

1. Verwendung von Trockenelektrolyten zum Polieren von Oberflächen von Ti und anderen Metallen und Legierungen durch Ionentransport, **dadurch gekennzeichnet, dass** der Trockenelektrolyt einen Satz von porösen Teilchen umfasst, die eine leitfähige Flüssigkeit zurückhalten, die HCl umfasst.

2. Verwendung von Trockenelektrolyten zum Polieren von Oberflächen von Ti und anderen Metallen und Legierungen durch Ionentransport nach Anspruch 1, **dadurch gekennzeichnet, dass** die Konzentration von HCl in Bezug auf das Lösungsmittel im Bereich von 1 bis 38 % liegt.

3. Verwendung von Trockenelektrolyten zum Polieren von Oberflächen von Ti und anderen Metallen und Legierungen durch Ionentransport nach Anspruch 2, **dadurch gekennzeichnet, dass** die Konzentration von HCl in Bezug auf das Lösungsmittel im Bereich von 5 und 15 % liegt.

4. Trockenelektrolyt, **dadurch gekennzeichnet, dass** er einen Satz poröser Teilchen umfasst, die eine leitfähige Flüssigkeit zurückhalten, die HCl als leitfähige Flüssigkeit nach einem der vorhergehenden Ansprüche umfasst.

## Revendications

1. Utilisation d'électrolytes secs pour polir des surfaces de Ti et d'autres métaux et d'alliages par le biais de transport d'ions **caractérisée en ce que** l'électrolyte sec comprend un ensemble de particules poreuses retenant un liquide conducteur comprenant de l'HCl.

2. Utilisation d'électrolytes secs pour polir des surfaces de Ti et d'autres métaux et d'alliages par le biais de transport d'ions selon la revendication 1 **caractérisée en ce que** la concentration d'HCl par rapport au solvant est comprise dans la plage allant de 1 à 38 %.

3. Utilisation d'électrolytes secs pour polir des surfaces de Ti et d'autres métaux et d'alliages par le biais de transport d'ions selon la revendication 2 **caractérisée en ce que** la concentration d'HCl par rapport au solvant est comprise dans la plage allant de 5 à 15 %.

4. Electrolyte sec **caractérisé en ce qu'**il comprend un ensemble de particules poreuses retenant un liquide conducteur comprenant de l'HCl en guise de liquide conducteur selon l'une quelconque des revendications précédentes.
